Europäisches Patentamt

European Patent Office

Office européen des brevets

(11) Publication number: **0 083 157**
**B1**

## (12) EUROPEAN PATENT SPECIFICATION

(45) Date of publication of patent specification: **23.07.86**

(21) Application number: **82306285.6**

(22) Date of filing: **25.11.82**

(51) Int. Cl.⁴: **B 32 B 27/08,** C 09 J 3/14,
C 08 F 236/04, C 08 F 232/02,
C 08 J 5/12

(54) Flexible film laminates.

(30) Priority: **28.12.81 US 334764**
**28.12.81 US 334762**

(43) Date of publication of application:
**06.07.83 Bulletin 83/27**

(45) Publication of the grant of the patent:
**23.07.86 Bulletin 86/30**

(84) Designated Contracting States:
**BE DE FR GB IT NL**

(56) References cited:
**GB-A-2 040 223**
**US-A-3 453 173**
**US-A-4 037 016**

(73) Proprietor: **MOBIL OIL CORPORATION**
**150 East 42nd Street**
**New York New York 10017 (US)**

(72) Inventor: **Hungerford, Gordon Parry**
**2210 Creek Road**
**Palmyra New York 14522 (US)**

(74) Representative: **West, Alan Harry et al**
**Mobil Court 3 Clements Inn**
**London WC2A 2EB (GB)**

Courier Press, Leamington Spa, England.

## Description

The present invention relates to flexible film laminates for use in food pouches and tubes.

In recent years, the food packaging industry has shown intense interest in the concept of pouch-packed foods which, among other advantages, do not require freezing for their preservation and can therefore dispense with costly and energy intensive refrigerated transportation and storage facilities. Much effort has gone into the development of a flexible food pouch which not only can withstand the rigors of sterilization and later reheating, e.g., microwave heating, and provide various properties which are sufficient to adequately protect the contents during storage, but which also employ materials which are toxicologically safe.

Certain packaging applications require that the packaging material constitutes a good barrier to the passage of oxygen. For example, the packaging of certain foods requires that a minimum of oxygen or air is transmitted to the contents. Cheese is one food product which should be packaged to the exclusion of oxygen.

Oriented polyacrylonitrile (PAN) film has excellent oxygen barrier properties. One shortcoming, however, is that it is not heat-sealable to itself. Because of this, joining of two PAN layers requires the imposition of an adhesive between the PAN layers which will act as an adherent bridge between the layers.

A further shortcoming of oriented polyacrylonitrile film is its relatively poor moisture barrier properties which is a particular problem in retortable food packaging. This deficiency can be overcome by applying to one surface of the PAN a layer of a thermoplastic material having good moisture barrier properties. The thermoplastic material can also provide a heat sealable coating on the PAN film. However, because of the significant chemical dissimilarity between PAN and thermoplastic moisture barrier polymers, such as polyolefins, adhesion between the two materials is poor and package integrity suffers. It is necessary, therefore, to impose an adhesive between the PAN and the thermoplastic moisture barrier which will act as a mutually adherent bridge between the two materials. It has been found, however, that materials which exhibit good adhesion to PAN do not in general exhibit good adhesion to materials such as a polyolefin film.

US—A—3,453,173 describes a polyolefin-polyacrylonitrile laminate, which is said to possess superior heat-seal strength and excellent barrier properties to the transmission of gases and is adaptable for the construction of food containers. The laminate is prepared by bringing the polyolefin surface and the polyacrylonitrile surface together and securing the surfaces together using an adhesive such as the ethylene-vinyl acetate copolymers disclosed in US—A—2,200,429. Either or both surfaces can be pre-treated in some manner in an effort to make them more adherent, e.g., by treatment with a gaseous mixture of boron trifluoride, as described in GB—A—834,196; by flame treatment or by treatment by corona discharge as described in US—A—2,632,921. However, because the conditions of preparation and the adhesives contemplated are not conducive to the formation of primary valence bonding, the interlaminar adhesion in boiling water would not be expected to be strong.

It is also known to metallize a PAN film in order to employ the metal layer as an effective surface through which adhesion can be accomplished to a water vapor barrier film.

In accordance with the present invention, there is provided a flexible film laminate comprising:

a) a first layer of a polyacrylonitrile homopolymer film;

b) a second layer joined at one surface to the first layer and composed of

(i) a polyacrylonitrile homopolymer film or
(ii) a heat-sealable polyolefin film contacted at said one surface by an adhesive in the form of a maleic acid anhydride adduct of an ethylene-propylene copolymer; and

c) an adhesive third layer joining said first and second layers, the adhesive of the third layer being a combination of a styrene-butadiene block copolymer and a random terpolymer of from 30 to 40 parts by weight of 1,3-pentadiene; 30 to 40 parts by weight of a monocyclic terpene; and from 25 to 35 parts by weight of alphamethylstyrene, said combination consisting of from 1 to 3 parts by weight of the block copolymer and from 3 to 1 parts by weight of the terpolymer; said first and second layers being bonded together by way of the adhesive(s) and the laminate having been subjected to ultraviolet radiation through the first layer during bonding.

The homopolymer polyacrylonitrile (PAN) film used as the first layer and optionally also as the second layer of the laminate of the invention is a known material and can be prepared by the polymerization and film formation methods described in US—A—4,066,731. It preferably has an oxygen permeability rate of less than about 10 cc/100 in.$^2$ (645 cm$^2$)/24 hr./atm. at 100°F (38°C), more preferably less than 0.1 cc/100 in.$^2$ (645 cm$^2$)/24 hr./atm. at about 73°F (23°C), and a water vapor transmission rate preferably less than about 50 g/100 in.$^2$ (645 cm$^2$)/24 hr. at 100°F (38°C) and 98% relative humidity, more preferably less than about 10 g/100 in.$^2$ (645 cm$^2$)/24 hr. at 100°F (38°C).

The aforesaid oxygen and water vapor transmission rates can be determined by various methods known in the art. For example, oxygen transmission rates can conveniently be measured with a Dohrmann Polymeric Permeation Analyzer PPA-1 (Dohrmann Envirotech Corp., Mountain View, California). The Dow cell can also be employed for this purpose in accordance with ASTM D-1434.

The polyolefins which are useful herein as the second laminate layer include the film-forming homopolymers and copolymers formed by the polymerization of one or more $C_2$—$C_8$ alpha-olefins, for example, ethylene, propylene, butene-1, pentene-1, hexene-1, heptene-1 and octene-1. The useful polyolefins also include film-forming copolymers of one or more of the aforesaid alpha-olefins copolymerized with up to 20 weight percent total, and preferably not more than 5 weight percent total, of one or more other monomers copolymerizable with the alpha-olefin, for example, carbon monoxide; sulfur dioxide; acrylic acid or an acrylate ester such as methyl acrylate, amyl acrylate, hexyl acrylate, and cyclohexyl acrylate; methacrylic acid or a methacrylate ester, such as methyl methacrylate, ethyl methacrylate, propyl methacrylate, butyl methacrylate and amyl methacrylate; vinyl acetic acid or a vinyl ester such as vinyl formate, vinyl acetate, vinyl propionate, vinyl butyrate, vinyl benzoate and isopropenyl acetate.

The polyolefins can be atactic, isotactic, syndiotactic, crystalline or amorphous or a combination of any of the foregoing. The preferred polyolefin films are the homopolymers and the copolymers of ethylene and propylene. A particularly preferred polyolefin film is a random copolymer of propylene with a minor amount of ethylene (commercially available from Exxon Corporation as EX-24).

Good adhesion can be obtained without subjecting the films to a surface treatment but, where the second layer is a polyolefin film, better adhesion is obtained by subjecting the polyolefin film to corona discharge and/or by other equivalent means.

Among all the adhesives which have been studied for use when the second film layer is a polyolefin, one particular adhesive has been discovered to be effective as part of the bonding system between the heat-sealable polyolefin layer and the PAN layer. This material is a maleic acid anhydride adduct of an ethylene-propylene copolymer. One such material which is commercially available as Morprime 78LJ10 (Morton Chemical, Division of Morton Norwich Products, Inc.) has been found to be particularly effective. In addition, this material has been cleared for use in food packaging by the Food and Drug Administration of the U.S. Government.

As indicated above, the prior art laminate disclosed in US—A—3,453,173 possesses properties which tend to make it a particularly worthwhile candidate for use in the construction of a food pouch. However, it has been observed that no, or at most very little, bonding of the polyolefin layer to the PAN layer is obtained if the sole adhesive is the aforementioned Morprime 78LJ10. This adhesive is an effective adhesive to the polyolefin but not the PAN film.

The adhesive third layer not only must be an effective adhesive to the PAN film, but where the second layer is a polyolefin film, it also must be an effective bonding system to the maleic anhydride/ethylene—propylene copolymer ad-

hesive applied to the polyolefin film. The third layer adhesive is actually a combination of two materials, the first of which is a styrene-butadiene block copolymer and the other is a random terpolymer of 1,3-pentadiene; a monocyclic terpene and alpha-methylstyrene. This combination consists of from 1 to 3 parts by weight of the block copolymer and from 3 to 1 parts by weight of the terpolymer. The first material of this combination is commercially available under the name Kraton 1000 Series Products (Shell Chemical Co., Polymers Division). One material Kraton 1102, styrene-butadiene block copolymer has the following properties determined at about 23°C on films cast from a toluene solution: tensile strength, psi 4600 (31716 kPa); 300% Modulous, psi 400 (2758 kPa) Elongation percent, 880; hardness, shore A 62; Angle Tear Strength-Die C, pli 190; Specific Gravity 0.94; and Solution Viscosity-24% w, cps from a toluene solution, 1200.

The second component of the third layer adhesive combination is a resinous random terpolymer which contains from 30 to 40 parts by weight of 1,3-pentadiene; 30 to 40 parts by weight of a monocyclic terpene; and 25 to 35 parts by weight of alpha-methylstyrene. A preferred monocyclic terpene is beta-phellandrene, although other monocyclic terpenes, or mixtures thereof, may be employed, such as dipen-tene, alpha-terpinene, beta-terpinene, alpha-phellandrene, gamma-terpinene, ter-pinolene, sylvestrene, origanene and the pyronenes.

It is preferred that the terpolymer additive exhibits the following properties:

melting point range (ring and ball) 75—125°C;
specific gravity 1.08—0.90;
bromine number 6—14;
iodine number 79;
acid value, less than 1;
saponification number, less than 1;
decomposition temperature (in air) 300°C;
color (in 50% toluene solution) Gardner 6; and
viscosity (in toluene) 70%.

A particularly preferred random terpolymer is prepared by polymerizing a feed stream containing 37.5% by weight 1,3-pentadiene, 37.5% beta-phellandrene and 25% by weight of alpha-methylstyrene in a toluene diluent in the presence of an aluminum chloride catalyst. The resulting terpolymer contains 34.0 parts by weight of 1,3-pentadiene, 36.5 parts by weight of beta-phellandrene and 29.5 parts by weight of alpha-methylstyrene. This material has a molecular weight (weight average) of 1880, a bromine number of 14, an iodine number 79, a glass transition temperature of 38°C, a viscosity toluene f to g of 70% and a decomposition temperature (in air) of 300°C.

The individual films comprising the laminate described herein can be prepared in widely varying thicknesses, for example, from 0.1 mils (0.003 mm) to 10 mils (0.3 mm), and preferably from 0.5 mil (0.013 mm) to 5 mils (0.13 mm).

The film laminate can be prepared in any manner which will result in effectively forming the adhesive bond. For example, where the second film layer is polyacrylonitrile, the combination adhesive, i.e., a styrene-butadiene block copolymer mixed with the random terpolymer, can be deposited from a suitable solution, e.g., a toluene solution onto one of the PAN layers. After drying, the adhesive coated film can then be laminated to the other PAN film. Where the second film layer is a polyolefin, the maleic acid anhydride adduct of ethylene-propylene copolymer can be applied to the polyolefin film from a dispersion of the adhesive in a high boiling aliphatic hydrocarbon. Following this, the combination adhesive, styrene-butadiene block copolymer mixed with the random terpolymer can be deposited on the PAN film from a suitable solution, e.g., a toluene solution. The two adhesive coated films can then be laminated together with the individual adhesive layers in face to face relationship. In both cases interfacial lamination can be facilitated by the use of pressure and/or heat.

Where the second film layer is a polyolefin, it is also possible to apply the adhesive combination of the styrene-butadiene block copolymer and the random terpolymer to the PAN and thereafter apply the maleic acid anhydride adduct of ethylene-propylene copolymer to this adhesive layer. After appropriate drying the polyolefin layer can be laminated by any suitable means to this adhesive arrangement.

After the various layers have been laminated together an effective bond between the layers is accomplished by irradiating the layers through the PAN film with an appropriate amount of ultraviolet (UV) radiation. Techniques for irradiating these films are well known to those skilled in the art. The degree of ultraviolet radiation should be such that it will produce a bond of greater strength between the layers than in the absence of said radiation. Typical sources for the UV radiation are a one kilowatt, high pressure, water cooled mercury vapor lamp, or a 140 watt Hanovia UV lamp, type 30600. The distance from the radiation source to the film will generally depend upon the ultraviolet radiation source but generally will be from 1 to 10 inches (2.5 to 25 cm) and preferably from 1 1/2 to about 5 inches (3.8 to 13 cm).

Example 1

A strip of corona treated, three mil (0.08 mm) thick film, of a random copolymer of propylene, with a minor amount of ethylene (commercially available from Exxon Corporation as EX-24) was coated with a 15 weight percent dispersion of a maleic acid anhydride adduct of an ethylene-propylene copolymer adhesive in a hydrocarbon vehicle and dried at a temperature sufficient to drive off the hydrocarbon vehicle, but below the melting point of the polyolefin film and the adhesive. A corresponding strip of biaxially oriented polyacrylonitrile homopolymer film of approximately 0.65 mil (0.002 mm) thick, was coated with a toluene solution containing 25% by weight solids, of a combination containing 6 parts by weight of a styrene-butadiene block copolymer and 13 parts by weight of a terpolymer of 34 parts by weight of 1,3-pentadiene, 36.5 parts by weight of beta-phellandrene and 29.5 parts by weight of alpha-methylstyrene. This layer was dried at 230°F (110°C) for 20 minutes.

The adhesive coated films were pressed together under modest pressure at least sufficient to cause a substantially uniform interfacial contact between the adhesives. The laminate was then heated at 380°F (193°C) for 45 seconds.

The laminate was irradiated with ultraviolet light through the PAN using 1 KW, high pressure, water cooled mercury vapor lamp for 2 minutes and 50 seconds. This yielded a laminate which could only be peeled apart with the application of substantial force, i.e., a force significantly greater than 1 1/2 lbs./in (263 N/m).

Attempts to laminate the polyolefin film to the PAN film with the individual adhesive materials, either with or without the contemplated irradiation, did not result in an effective laminate.

The laminates of Example 1 could be fabricated into retortable pouches employing known methods. In accordance with one such procedure, the laminate was folded over upon itself with the heat-sealable polyolefin sides facing each other and these faces were edge-sealed between heated plates. Such a pouch could be filled with food or other material, the top heat-sealed and an effective retortable pouch thereby obtained.

Example 2

A further strip of biaxially oriented polyacrylonitrile homopolymer 0.65 mil (0.02 mm) thick was coated with a toluene solution containing 25% by weight solids of a combination containing 6 parts by weight of a styrene-butadiene block copolymer (Kraton 1102) and 13 parts by weight of a terpolymer of 34 parts by weight of 1,3-pentadiene, 36.5 parts by weight of beta-phellandrene and 29.5 parts by weight of alpha-methylstyrene. This layer was dried at about 230°F (110°C) for about 20 minutes.

A corresponding adhesive coated PAN film was pressed against the first film under a modest pressure which was at least sufficient to cause a substantially uniform interfacial contact between the adhesives. The laminate was then heated at about 380°F (193°C) for about 45 seconds. This laminate was thereafter irradiated with ultraviolet light using a 1 KW, high pressure, water cooled mercury vapor lamp for 2 minutes and 50 seconds. Again the laminate could only be peeled apart by applying a force significantly greater than 1 1/2 lbs./in (263 N/m).

Attempts to laminate the PAN film with the adhesive material without the contemplated irradiation, did not result in as effective a laminate.

The laminate of Example 2 could be fabricated into pouches or pipe-like tubes, employing known methods. In accordance with one such procedure, the PAN film was folded over upon itself and edge-sealed with the subject adhesive, in the manner of the foregoing example. Such a pouch could be filled with food or other material, and top-sealed and after UV treating, an effective pouch was obtained.

It is to be understood that "laminates" as used herein includes both full film width lamination with the UV treated adhesive or comparatively narrow line lamination to form selective bonding of PAN to PAN. Tubes or pipes of PAN can be prepared, for example, by forming the PAN into a cylinder or tube with a slight overlap and placing the adhesive combination between the overlap regions. Thereafter, pressure and/or heat is applied to the line lamination region and the bonded region irradiated with UV.

## Claims

1. A flexible film laminate comprising
a) first layer of polyacrylonitrile homopolymer film;
b) a second layer joined at one surface to the first layer and composed of

(i) a polyacrylonitrile homopolymer film or
(ii) a heat-sealable polyolefin film contacted at said one surface by an adhesive in the form of a maleic acid anhydride adduct of an ethylene-propylene copolymer; and

c) an adhesive third layer joining said first and second layers, the adhesive of the third layer being a combination of a styrene-butadiene block copolymer and a random terpolymer of from 30 to 40 parts by weight of 1,3-pentadiene; 30 to 40 parts by weight of a monocyclic terpene; and 25 to 35 parts by weight of alphamethylstyrene, said combination consisting of from 1 to 3 parts by weight of the block copolymer and from 3 to 1 parts by weight of the terpolymer; said first and second layers being bonded together by way of the adhesive(s) and the laminate having been subjected to ultraviolet radiation through the first layer during bonding.

2. The flexible film laminate of Claim 1 wherein the second layer is a polyacrylonitrile homopolymer film.

3. The flexible film laminate of Claim 1 wherein the second layer is a polyolefin film.

4. The flexible film laminate of Claim 3 in which the second layer is a film of a homopolymer or a copolymer of a $C_2$—$C_8$ alpha-olefin.

5. The flexible film laminate of Claim 4 in which the second layer contains up to 20 weight percent of one or more other monomers copolymerizable with the alpha-olefin.

6. The flexible film laminate of Claim 3 in which the second layer is a homopolymer of ethylene or propylene or a copolymer of ethylene and propylene.

7. The flexible film laminate of any preceding Claim wherein said monocyclic terpene is beta-phellandrene.

8. The flexible film laminate of any preceding Claim in which the individual layers range from 0.003 mm to 0.3 mm (0.1 to 10 mils) in thickness.

9. The flexible film laminate of Claim 2 formed into a food container by bonding selected areas of the first and second layer together by way of the adhesive third layer.

10. The flexible film laminate of Claim 3 formed into a food container by heat-sealing selected areas of the laminate together by way of the second layers.

## Patentansprüche

1. Biegsamer Schichtstoffilm, welcher umfaßt:
a) eine erste Schicht eines Polyacrylonitrilhomopolymerfilms,
b) eine zweite Schicht, verbunden an eine Oberfläche der ersten Schicht und zusammengesetzt aus

1) einem Polyacrylonitrilhomopolymerfilm oder
2) einem wärmehärtbaren Polyolefinfilm, der mit dieser einen Oberfläche durch ein Klebemittel in Form eines Maleinsäureanhydrid-Addukts eine Ethylen-Propylen-Kopolymers in Kontakt gebracht wird;

c) eine adhesiven dritten Schicht, die die erste und zweite Schicht verbindet, wobei das Klebemittel der dritten Schicht eine Kombination eines Styrol-Butadein-Blockkopolymers und eines regellosen Terpolymers von 30 bis 40 Gew.-Teilen von 1,3-Pentadien, 30 bis 40 Gew-Teilen eines monozyklischen Terpens und 25 bis 35 Gew.-Teilen α-Methylstyrol ist, wobei diese Kombination aus von 1 bis 3 Gew.-Teilen des Blockkopolymers und von 3 bis 1 Gew.-Teilen des Terpolymers besteht, wobei die erste und zweite Schicht mittels des (der) Klebemittel(s) zusammen verbunden sind, und das Laminat während des Verbindens eine ultravioletten Bestrahlung durch die erste Schicht unterzogen wurde.

2. Biegsamer Schichtstoffilm nach Anspruch 1, worin die zweite Schicht ein Polyacrylonitrilhomopolymerfilm ist.

3. Biegsamer Schichtstoffilm nach Anspruch 1, worin die zweite Schicht ein Polyolefinfilm ist.

4. Biegsamer Schichtstoffilm nach Anspruch 3, worin die zweite Schicht ein Film eines Homopolymers oder eines Kopolymers eines $C_2$—$C_8$-α-Olefins ist.

5. Biegsamer Schichtstoffilm nach Anspruch 4, worin die zweite Schicht bis zu 20 Gew.-% eines oder mehrerer anderer Monomere enthält, die mit dem α-Olefin copolymerisierbar sind.

6. Biegsamer Schichtstoffilm nach Anspruch 3, worin die zweite Schicht ein Homopolymer von Ethylen oder Propylen oder Copolymer von Ethylen und Propylen ist.

7. Biegsamer Schichtstoffilm nach einem der vorstehenden Ansprüche, worin das monozyklische Terpen β-Phellandren ist.

8. Biegsamer Schichtstoffilm nach einem der vorstehenden Ansprüche, worin die einzelnen Schichten eine Dicke im Bereich von 0,003 mm bis 0,3 mm (0,1 bis 10 mils) haben.

9. Biegsamer Schichtstoffilm nach Anspruch 2, geformt in einen Lebensmittelbehälter, indem ausgewählten Flächen der ersten und zweiten Schicht mittels der adhesiven dritten Schicht zusammen verbunden werden.

10. Biegsamer Schichtstoffilm nach Anspruch 3, geformt in einen Lebensmittelbehälter, indem ausgewählte Flächen des Laminats mittels der zweiten Schicht zusammen heißversiegelt werden.

## Revendications

1. Film stratifié flexible comprenant:

a) une première couche d'un film de polyacrylonitrile homopolymère;

b) une seconde couche liée à une face de la première couche et composée de

(i) un film de polyacrylonitrile homopolymère ou
(ii) un film de polyoléfine thermosoudable, mise en contact avec ladite face par un adhésif sous la forme d'un adduct d'anhydride maléique d'un copolymère éthylène-propylène; et

c) une troisième couche d'adhesif reliant lesdites première et seconde couches, l'adhesif de la troisième couche étant une combinaison d'un copolymère séquence styrène-butadiène et d'un terpolymère statistique de 30 à 40 parties en poids de 1,3-pentadiène 30 à 40 parties en poids d'un terpène monocyclique et 25 a 35 parties en poids d'1-méthylstyrène, ladite combinaison consistant en 1 à 3 parties en poids du copolymère séquence et de 1 à 3 parties en poids du terpolymère; lesdites première et seconde couches étant collées ensemble au moyen du ou des adhésifs et le stratifié ayant été soumis à l'exposition aux ultraviolets à travers la première couche pendant le collage.

2. Film stratifié flexible selon la revendication 1, dans lequel la seconde couche est un film de polyacrylonitrile homopolymère.

3. Film stratifié flexible selon la revendication 1, dans lequel la seconde couche est un film de polyoléfine.

4. Film stratifié flexible selon la revendication 3, dans lequel la second couche est un film d'un homopolymère ou d'un copolymère d'une α-oléfine en $C_2$—$C_8$.

5. Film stratifié flexible selon la revendication 4, dans lequel la seconde couche contient jusqu'à 20% en poids d'un ou plusieurs autres monomères copolymérisables avec l'α-oléfine.

6. Film stratifié flexible selon la revendication 3, dans lequel la seconde couche est un homopolymère d'éthylène ou de propylène ou un copolymère d'éthylène et de propylène.

7. Film stratifié flexible selon l'une quelconque des revendications précédentes, dans lequel le terpène monocyclique est le β-phellandrène.

8. Film stratifié flexible selon l'une quelconque des revendications précédentes, dans lequel les couches individuelles ont une épaisseur variant de 0,003 mm à 0,3 mm (0,1 à 10 mils).

9. Film stratifié selon la revendication 2 transformé en un récipient alimentaire par collage de zones choisies de la première et de la seconde couche au moyen de la troisième couche adhésive.

10. Film stratifié flexible selon la revendication 3 transformé en un récipient alimentaire par termosoudage de zones choisies du stratifié entre elles au moyen des secondes couches.